# EUROPÄISCHE PATENTSCHRIFT

(11) **EP 1 281 876 B1**
(45) Veröffentlichungstag und Bekanntmachung des Hinweises auf die Patenterteilung: **28.12.2005**
(21) Anmeldenummer: 02008604.7
(22) Anmeldetag: 17.04.2002
(51) Int. Cl.: F16B 43/00, F16B 37/04, F16B 5/12, B60R 13/02, F16F 1/32, F16B 5/06

(54) **Befestigungselement für eine Verkleidung**
Moulding retainer
Fixation pour un habillage

(30) Priorität: 04.08.2001 DE 10138354
(43) Veröffentlichungstag der Anmeldung: 05.02.2003
(73) Patentinhaber: Lydall Gerhardi GmbH & Co.KG, 58540 Meinerzhagen (DE)
(72) Erfinder: Koslowski, Horst-Dietrich, 58540 Meinerzhagen (DE); Klautke, Martin, 58540 Meinerzhagen (DE)
(74) Vertreter: Dörner, Lothar

(56) Entgegenhaltungen:
- DE-A- 3 913 354
- DE-A- 10 057 947
- FR-A- 2 781 849
- GB-A- 2 317 199
- US-A- 4 890 966
- US-A- 5 871 320

## Beschreibung

Die Erfindung betrifft ein Befestigungselement mit einem Oberteil zur Aufnahme einer auf einem Bolzen befestigbaren Federscheibe und mit einem mit dem Oberteil verrastbaren und einen Durchgang einer Verkleidung durchdringenden Unterteil.

Die Befestigung einer Verkleidung, eines Hitzeschilds oder eines Schallabsorberschilds an einen Kraftfahrzeugunterboden oder an einem Motorblock ist aufwendig. Vor allem tritt leicht Kontkaktkorrosion auf, da die Verkleidung im wesentlichen aus Aluminium besteht.

Aufgabe der Erfindung ist eine schwingungsdämpfende, lösbare Befestigung unter Vermeidung von Kontaktkorrosion.

Diese Aufgabe wird nach der Erfindung dadurch gelöst, daß das aus einem Thermoplast bestehende Unterteil einen Durchgang für den Bolzen und mehrere am Rand des Durchgangs angeordnete Zungen mit Rastnasen aufweist, daß das aus einem Thermoplast bestehende Oberteil ebenfalls einen Durchgang aufweist, in dessen Rand die Rastnasen eingreifen, und daß das Oberteil die Federscheibe auf Stegen aufnimmt und mit Rastnasen übergreift.

Die Erfindung unterscheidet sich insofern vom Stand der Technik, als das aus einem isolierenden Thermoplast bestehende Befestigungselement die Verkleidung zwischen Oberteil und Unterteil aufnimmt und auf einem Bolzen festgespannt ist. Dadurch erfolgt eine Fixierung der Verkleidung und die Vermeidung eines metallischen Kontakts zwischen Bodenblech und Verkleidung. Damit ist eine Kontaktkorrosion ausgeschlossen. Die Befestigung ist außerdem schwingungsdämpfend.

Eine stabile Halterung der Federscheibe wird dadurch erzielt, daß die Stege als Ringstege und als Radialstege ausgebildet sind. Die Stege bilden ein Gitter, das eine gleichmäßige Auflage und damit stabile Absützung für die Federscheibe darstellt

Das Befestigungselement ist dadurch von dem Unterboden leicht lösbar, als die Federscheibe in den Rastnasen drehbar aufgenommen ist. Damit kann die Federscheibe durch Drehung von dem Gewinde des Bolzens gelöst werden. Zur erneuten Befestigung wird das Befestigungselement mit der Federscheibe wieder auf den Gewindebolzen aufgedrückt.

Ein grpßflächige Auflage und Abstützung des Befestigungselements auf dem Bodenblech wird dadurch erzielt, daß In drei durch die Radialstege begrenzten Segmenten des Unterteils Ringstegabschnitte vorgesehen sind, deren Unterseite mit der Unterseite des äußeren Ringstegs in einer Ebene liegt.

Ein stabiler Zusammenhalt des Befestigungselements ist dadurch erreicht, daß In den drei anderen alternierend angeordnten Segmenten des Unterteils an dem Ringsteg Zungen mit nach außen gerichteten Rastnasen angeordnet sind.

Eine erschütterungsfreie radiale Fixierung des Befestigungselements wird dadurch erreicht, daß der Durchmesser des die Außenflächen der Zungen umschließenden Kreises dem Durchmesser des Durchgangs des Oberteils und die Höhe der Zungen von der Oberfläche der Radialstege bis zu der Kante der Rastnasen der Höhe des inneren Ringstegs entspricht.

Ein Ausführungsbeispiel wird anhand der Zeichnungen erläutert, in denen darstellen:
Fig. 1 das Oberteil des Befestigungselements in Unteransicht,
Fig. 2 eine Seitenansicht des Oberteils,
Fig. 3 einen Schnitt nach der Linie III-III in Fig. 1,
Fig. 4 das Unterteil des Befestigungselements in Unteransicht,
Fig. 5 eine Seitenansicht des Unterteils,
Fig. 6 einen Schnitt nach der Linie VI-VI in Fig. 4,
Fig. 7 eine perspektivische Gesamtansicht des Befestigungselements und
Fig. 8 einen Schnitt durch das gesamte Befestigungselement.

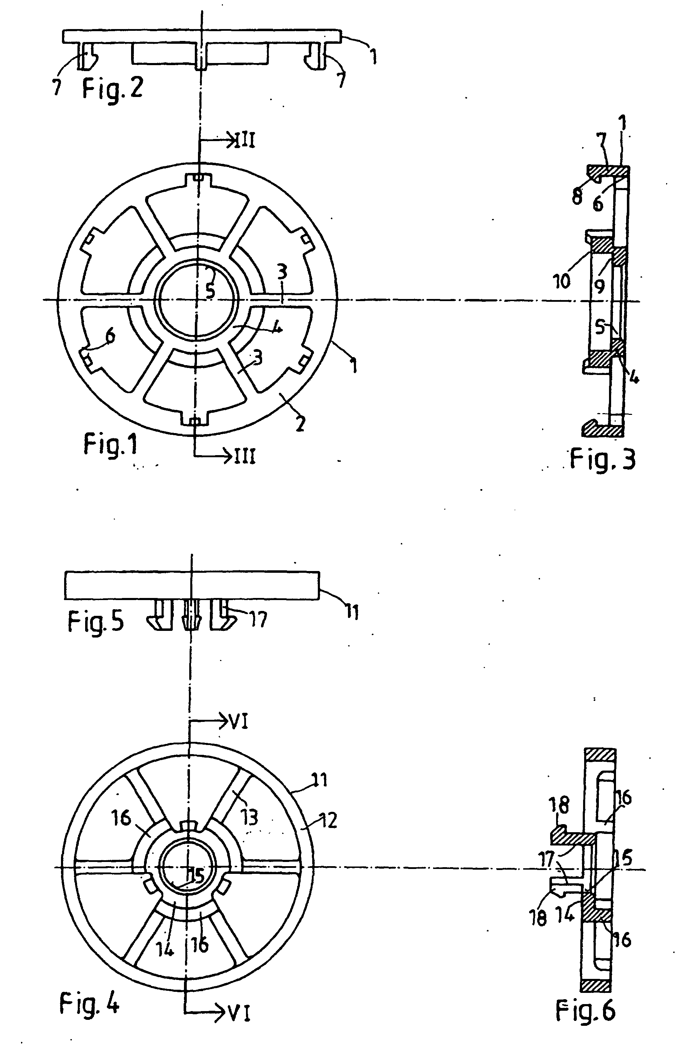

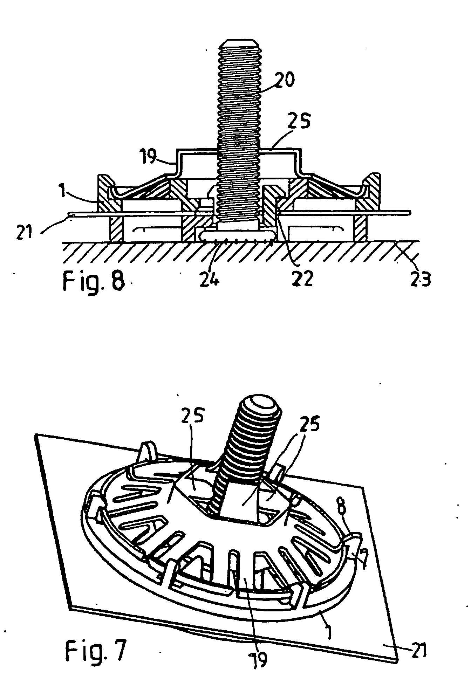

Das in den Fig. 1 bis 3 dargestellte Oberteil 1 umfaßt einen äußeren Ringsteg 2 und einen damit durch Radialstege 3 verbundenen inneren Ringsteg 4, der einen Durchgang 5 umgibt. Die Unterseiten der Ringstege 2 ,3 und der Radialstege 4 liegen in einer Ebene. Das Ausführungsbeispiel weist sechs Radialstege 3 auf. Innerhalb jedes durch zwei Radialstege 3 begrenzten Segmentes vorzugsweise in einem Ausschnitt 6 des äußeren Ringstegs 2 ist eine nach oben gerichtete Zunge 7 mit einer nach innen gerichteten Rastnase 8 angeordnet. An den Durchgang 5 schließt sich eine Außenstufe 9 und daran ein Ringsteg 10 an. Das Oberteil 1 nimmt auf den Stegen eine Federscheibe 19 auf, die am Außenrand durch die Rastnasen 8 der Zungen 7 festgehalten wird, vergleiche Fig. 7 und 8.

Das in den Fig. 4 bis 6 dargestellte Unterteil 11 umfaßt einen äußeren Ringsteg 12 und einen damit durch sechs Radialstege 13 verbundenen inneren Ringsteg 14, der einen Durchgang 15 begrenzt. In drei durch die Radialstege 13 begrenzten Segmenten sind Ringstegabschnitte 16 vorgesehen, deren Unterseite mit der Unterseite des äußeren Ringstegs 12 in einer Ebene liegt, damit eine großflächige Auflage des Befestigungselemnets gewährleistet ist. In den drei anderen alternierend angeordnten Segmenten sind an dem Ringsteg 14 Zungen 17 mit nach außen gerichteten Rasmasen 18 angeordnet. Der Durchmesser des die Außenflächen der Zungen 17 umschließenden Kreises entspricht dem Durchmesser des Durchgangs 5 des Oberteils 1. Die Höhe der Zungen 17 von der Oberfläche der Radialstege 13 bis zu der Kante der Rastnasen 18 entspricht der Höhe des inneren Ringstegs 4. Dadurch erreicht man eine Fixierung des Befestigungselements und eine Schwingungsdämpfung.

Das Oberteil 1 und das Unterteil 11 sind jeweils ein Spritzgießformteil aus einem Thermoplast.

Die Fig. 7 und 8 zeigen das zusammengesetzte Befestigungselement und dessen Anwendung. Das Oberteil hält mit den Rastnasen 8 die Federscheibe 19 fest. Eine plattenförmige Verkleidung 21 hat einen Durchgang 22. Auf diesen Durchgang 22 werden der Durchgang 5 des Oberteils 1 und der Durchgang 15 des Unterteils 11 ausgerichtet. Die Zungen 17 des Unterteils 11 werden durch den Durchgang 22 der Verkleidung 21 und den Durchgang 5 der Oberteils 1 geschoben, bis die Rastnasen 18 in die Außenstufe 9 des Oberteils 1 einrasten. Damit klemmen das Oberteil und das Unterteil des Befestigungselements die Verkleidung 21 zwischen sich fest..

Ein Bolzen bzw. Gewindebolzen 20 ist an einem Kraftfahrzeugunterboden 23 oder einem anderen Träger durch ein Schweißverbindung 24 gehalten. Das Befestigungselement wird mit der Verkleidung 21 auf den Gewindebolzen 20 aufgedrückt, wobei die Zungen 25 der Federscheibe 19 in das Gewinde des Gewindebolzens 20 eingreifen und das Befestigungselement und damit die Verkleidung festhalten.

Ein Lösen des Befestigungselements ist jederzeit möglich, indem die Federscheibe 19 innerhalb des Oberteils 1 in Löserichtung des Gewindeeingriffs gedreht wird. Es ist ein Austausch derVerkleidung 21 oder eine andere Wartungsmaßnahme oder Reparatur möglich.

## Patentansprüche

1. Befestigungselement mit einem Oberteil zur Aufnahme einer auf einem Bolzen befestigbaren Federscheibe und mit einem mit dem Oberteil verrastbaren und einen Durchgang einer Verkleidung durchdringenden Unterteil, **dadurch gekennzeichnet, daß** das aus einem Thermoplast bestehende Unterteil (11) einen Durchgang (15) für den Bolzen (20) und mehrere am Rand des Durchgangs (15) angeordnete Zungen (17) mit Rastnasen (18) aufweist, daß das aus einem Thermoplast bestehende Oberteil (1)ebenfalls einen Durchgang (5) aufweist, in dessen Rand die Rastnasen (18) eingreifen, und daß das Oberteil (1) die Federscheibe (19) auf Stegen (2, 3, 4) aufnimmt und mit Rastnasen (8) übergreift.

2. Befestigungselement nach Anspruch 1, **dadurch gekennzeichnet, daß** die Stege als Ringstege (2, 4) und als Radialstege (3) ausgebildet sind.

3. Befestigungselement nach Anspruch 1 oder 2, **dadurch gekennzeichnet, daß** die Federscheibe (19) in den Rastnasen (8) drehbar aufgenommen ist.

4. Befestigungselement nach einem der Ansprüche 1 bis 3, **dadurch gekennzeichnet, daß** In drei durch die Radialstege (13) begrenzten Segmenten des Unterteils (11) Ringstegabschnitte (16) vorgesehen sind, deren Unterseite mit der Unterseite des äußeren Ringstegs (12) in einer Ebene liegt.

5. Befestigungselement nach Anspruch 4, **dadurch gekennzeichnet, daß** In den drei anderen alternierend angeordnten Segmenten des Unterteils (11) an dem Ringsteg (14) Zungen (17) mit nach außen gerichteten Rastnasen (18) angeordnet sind.

6. Befestigungselement nach Anspruch 5, **dadurch gekennzeichnet, daß** der Durchmesser des die Außenflächen der Zungen (17) umschließenden Kreises dem Durchmesser des Durchgangs (5) des Oberteils (1) und die Höhe der Zungen (17) von der Oberfläche der Radialstege (13) bis zu der Kante der Rastnasen (18) der Höhe des inneren Ringstegs (4) entspricht.

## Claims

1. Retainer with an upper part for receiving a spring washer attached to a bolt and with a lower part which locks onto the upper part and passes through an opening in a moulding, **characterised in that** the lower part (11), consisting of a thermoplastic, has an opening (15) for the bolt (20) and several tongues (17) with locking catches (18) located at the edge of the opening (15), that the upper part (1), consisting of a thermoplastic, also has an opening (5), into the edge of which the locking catches (18) lock, and that the upper part (1) receives the spring washer (19) on ridges (2, 3, 4) and hooks over it with locking catches (8).

2. Retainer according to claim 1, **characterised in that** the ridges take the form of ring ridges (2, 4) and radial ridges (3).

3. Retainer according to claim 1 or claim 2, **characterised in that** the spring washer (19) is received in the locking catches (8) in such a way that it can rotate.

4. Retainer according to one of the claims 1 to 3, **characterised in that** in three segments of the lower part (11) delimited by the radial ridges (13) ring-ridge sections (16) are provided, whose underside lies in the same plane as the underside of the outer ring ridge (12).

5. Retainer according to claim 4, **characterised in that** tongues (17) with outwardly pointing locking catches (18) are located on the ring ridge (14) in the three other alternately arranged segments of the lower part (11).

6. Retainer according to claim 5, **characterised in that** the diameter of the circle embracing the outer surfaces of the tongues (17) is equal to the diameter of the opening (5) of the upper part (1) and the height of the tongues (17) from the surface of the radial ridges (13) to the edge of the locking catches (18) is equal to the height of the inner ring ridge (4).

## Revendications

1. Élément de fixation composé d'une pièce supérieure destinée à recevoir une rondelle ressort se laissant fixer sur un goujon et d'une pièce inférieure pouvant en cranter contre la pièce supérieure et traversant un orifice d'un habillage, **caractérisé en ce que** la pièce inférieure (11) en une matière thermoplastique présente un orifice de passage (15) du goujon (20) et plusieurs languettes (17) avec crans en saillie (18) disposées sur le pourtour de l'orifice de passage (15), **en ce que** la pièce supérieure (1) en une matière thermoplastique présente également un orifice de passage (5) dans le pourtour duquel les crans en saillie (18) engrènent, et **en ce que** la pièce supérieure (1) reçoit la rondelle ressort (19) sur des nervures (2, 3, 4) et la chevauche par le biais des crans en saillie (8).

2. Élément de fixation selon la revendication 1, **caractérisé en ce que** les nervures sont des nervures annulaires (2, 4) et radiales (3).

3. Élément de fixation selon la revendication 1 ou 2, **caractérisé en ce que** la rondelle ressort (19) est logée dans les crans en saillie (8) tout en pouvant tourner.

4. Élément de fixation selon l'une des revendications 1 à 3, **caractérisé en ce que** dans trois des segments de la pièce inférieure (11) délimités par les nervures radiales (13), des segments annulaires (16) sont prévus, dont la face inférieure se trouve sur le même plan que la face inférieure de la nervure annulaire extérieure (12).

5. Élément de fixation selon la revendication 4, **caractérisé en ce que** dans les trois autres segments de la pièce inférieure (11) agencés en alternance, des languettes (17) sont agencées contre la nervure annulaire (14) et présentent des crans en saillie (18) dirigés vers l'extérieur.

6. Élément de fixation selon la revendication 5, **caractérisé en ce que** le diamètre du cercle entourant les surfaces extérieures des languettes (17) correspond au diamètre de l'orifice de passage (5) de la pièce supérieure (1) et que la hauteur des languettes (17), de la surface des nervures radiales (13) au bord des crans en saillie (18), correspond à la hauteur de la nervure annulaire intérieure (4).
